# EUROPÄISCHE PATENTANMELDUNG

(11) **EP 1 010 897 A2**
(43) Veröffentlichungstag der Anmeldung: **21.06.2000**
(21) Anmeldenummer: 99122064.1
(22) Anmeldetag: 17.11.1999
(51) Int. Cl.: F15B 11/12, F16H 63/30

(54) **Hydraulische Stelleinrichtung**

(30) Priorität: 17.12.1998 DE 19858321
(71) Anmelder: Volkswagen Aktiengesellschaft, 38436 Wolfsburg (DE)
(72) Erfinder: Becker, Volker, Dipl.-Ing., 38518 Gifhorn (DE)

(57) **Zusammenfassung**

Es ist eine hydraulische Stelleinrichtung mit einem Zylinder (1) und einem durch ein Druckmittel doppelseitig beaufschlagbaren Kolben, an den ein Stellelement gekoppelt ist, vorgesehen, wobei der Kolben aus zwei gegeneinander im Zylinder verschiebbaren ersten und zweiten Einzelkolben (3, 4) gebildet ist.

## Beschreibung

Die vorliegende Erfindung betrifft eine hydraulische Stelleinrichtung mit einem Zylinder und einem durch ein Druckmittel beaufschlagbaren doppelseitigen Kolben nach dem Oberbegriff des Anspruchs 1.

Eine solche hydraulische Stelleinrichtung kann als Steller überall dort eingesetzt werden, wo es notwendig ist, definierte Endstellungen eines zu verstellenden Bauteiles zu erhalten. So kann die hydraulische Stelleinrichtung beispielsweise als Gangsteller bei einem Schaltgetriebe eines Kraftfahrzeugs eingesetzt werden. Bei einem solchen Schaltgetriebe werden üblicherweise zwei Gänge von einer hydraulischen Stelleinrichtung bedient. Neben den beiden geschalteten Zuständen der Gänge muß die Stelleinrichtung hier auch für eine definierte Neutralstellung sorgen, bei der sich keine der von der Stelleinrichtung betätigten Gangstufen im Eingriff befindet.

Wenn ein doppelseitig wirkender Zylinder zu diesem Zweck verwendet wird, so ergibt sich das Problem, daß dieser nur zwei Endstellungen aufweist, nicht aber eine definierte Neutralstellung. Um eine solche Neutralstellung zu erbringen, ist es bereits versucht worden, einen elektrohydraulisch gesteuerten Schaltzylinder mit Lagerückführung und einer entsprechenden Regelelektronik zu verwenden. Diese Lösung weist aber das Problem auf, daß bei einem Ausfall der Elektrik ein Durchschalten zu der gegenüberliegenden Gangstufe möglich ist, die Neutralstellung also nicht mehr gewährleistet ist.

Aus der EP 0 487 861 A1 ist auch bereits ein Dreistellungszylinder bekannt geworden, der einen Stellzylinder mit einem doppelseitig beaufschlagbaren Kolben aufweist. Der doppelseitig beaufschlagbare Kolben dieses Stellzylinders setzt sich aus jeweils zwei Doppelkolben zusammen, weist als insgesamt vier Einzelkolben auf, die zur Betätigung eines Schaltelements notwendig sind. Nach einer weiteren Ausführungsform dieser bekannten hydraulischen Stelleinrichtung besitzt der Kolben drei Einzelkolben in der Form von Stufenkolben, die in zwei getrennten Zylindern angeordnet sind. Wenn bei dieser bekannten Stelleinrichtung eine Neutralstellung erreicht werden soll, dann werden zwei Stufenkolben an eine Anschlagfläche jeweils eines Zylinders über Druckbeaufschlagung geführt und auch der dritte Kolben liegt an den beiden Stufenkolben an. Die Neutralstellung dieser bekannten Stelleinrichtung wird also durch vier Anschlagflächen bestimmt.

Wenn bei dieser bekannten Stelleinrichtung die beiden Zylinder von ihrer Einbaulage abweichen, was beispielsweise nach einer gewissen Betriebsdauer der Fall sein kann oder aber bei der Montage der bekannten Stelleinrichtung eine genaue Einbaulage gar nicht erreicht wird, dann ergibt sich das Problem, daß nur einer der beiden Stufenkolben am Zylinder zur Anlage kommt und damit keine genaue Neutrallage mehr erreicht werden kann. Auch führt die Zahl von vier Anschlagflächen zu einer ungenauen Neutrallage, da bei jeder Anschlagfläche eine Toleranz beziehungsweise ein Spiel auftritt und es bekannt ist, daß sich solche Toleranzen addieren. Wenn sich diese Toleranzen gerade ausgleichen, was aber nicht vorhergesagt werden kann, kann auch die bekannte Stelleinrichtung eine Neutralstellung ermöglichen, was aber in jedem Fall mit hohem Bauaufwand erkauft werden muß. In dem Fall aber, daß sich die Toleranzen nicht ausgleichen, tritt eine Abweichung von der Neutralstellung auf.

Ausgehend hiervon liegt der vorliegenden Erfindung daher zur Beseitigung der geschilderten Nachteile die Aufgabe zugrunde, eine hydraulische Stelleinrichtung zu schaffen, die eine definierte Neutralstellung ermöglicht und darüber hinaus eine geringere Zahl von Bauteilen aufweist.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Nach der Erfindung ist eine hydraulische Stelleinrichtung mit einem Zylinder und einem durch ein Druckmittel doppelseitig beaufschlagbaren Kolben, an den ein Stellelement gekoppelt ist, vorgesehen, wobei der Kolben aus nur zwei gegeneinander im Zylinder verschiebbaren ersten und zweiten Einzelkolben gebildet ist. Im Gegensatz zu der vorstehend beschriebenen bekannten hydraulischen Stelleinrichtung weist daher der Kolben zwei einzelne einstückige Kolben auf, die in dem Zylinder zwischen Endstellungen und einer Neutralstellung bewegbar sind, die durch Anschlagstellungen der Einzelkolben definiert sind.

An einem der beiden Einzelkolben befindet sich ein Stellelement, beispielsweise eine Schaltgabel über beispielsweise einen Mitnehmer angeordnet, so daß über die Bewegung dieses Einzelkolbens drei definierte Schaltgabelstellungen oder Schaltstellungen eingestellt werden können. Alle Schaltstellungen werden dabei über Anschlagstellungen der Einzelkolben definiert, d. h. also solchen Stellungen, bei denen sich ein Einzelkolben an jeweils nur einer Anschlagfläche angeordnet befindet. Durch die Festlegung der Anschlagstellungen über jeweils nur eine Anschlagfläche wird erreicht, daß der Einfluß von Toleranzen und/oder Spiel zwischen dem Einzelkolben und der Anschlagfläche verglichen mit der bekannten hydraulischen Stelleinrichtung deutlich verringert wird und somit jeweils definierte Endstellungen und eine Neutralstellung erreicht werden können. Auch befinden sich die beiden Einzelkolben in nur einem einzigen Zylinder angeordnet, so daß der Nachteil der Anordnung zweier Zylinder zueinander beseitigt worden ist.

Die hydraulische Stelleinrichtung nach der Erfindung zeichnet sich insbesondere dadurch aus, daß die Neutralstellung dadurch gebildet wird, daß ein Einzelkolben an nur einer Anschlagfläche des Zylinders anliegt und die beiden Einzelkolben aneinander anliegen. Durch die Anlage nur eines Einzelkolbens an nur einer Anschlagfläche des Zylinders in der Neutralstellung wird erreicht, daß die Notwendigkeit der genauen Positionierung zweier Anschlagflächen zueinander zur Erreichung der Neutralstellung entfällt, da eine solche Positionierung aufwendig und fehleranfällig ist und sich insbesondere nach einer längeren Betriebsdauer auch verstellen kann, so daß dann eine definierte Neutralstellung nicht mehr möglich ist. Die hydraulische Stelleinrichtung nach der Erfindung schafft hier Abhilfe, da nur eine in einem einstückigen Zylinder vorgesehene Anschlagfläche zur Einstellung der Neutralstellung ausreicht.

Nach der Erfindung können die Einzelkolben jeweils zwei unterschiedlich große vom Druckmittel beaufschlagbare Wirkflächen aufweisen. Wenn sich die beiden Einzelkolben in der Neutralstellung aneinander angeordnet befinden, dann werden beide Einzelkolben an ihren weiteren unterschiedlich ausgeführten Wirkflächen mit Druckmittel beaufschlagt, so daß sich ein Ungleichgewicht der Kräfte zwischen den beiden Einzelkolben einstellt.

Der in der Neutralstellung an der Zylinderanschlagfläche anliegende erste Einzelkolben ist ein Stufenkolben mit einer Durchtrittsöffnung für das Druckmittel und weist die größte Wirkfläche der Einzelkolben auf. Das vorstehend beschriebene Ungleichgewicht der Kräfte führt aber nicht mehr zur einer weiteren Verlagerung dieses Stufenkolbens im Zylinder, da er Stufenkolben an der Zylinderanschlagfläche anliegt.

Auch der zweite Einzelkolben ist ein Stufenkolben, an den das Stellelement gekoppelt ist. Der zweite Einzelkolben weist ebenfalls unterschiedliche Wirkflächen auf, wobei die in der Neutralstellung am ersten Stufenkolben anliegende Wirkfläche die kleinere der beiden Wirkflächen des zweiten Einzelkolbens ist. Wenn nun dieser zweite Einzelkolben beidseitig mit gleichem Druck beaufschlagt wird, dann erzeugt die größere Wirkfläche die größere Kraftkomponente, die dafür sorgt, daß sich der zweite Einzelkolben entsprechend der größeren Kraftkomponente bewegt, so daß er an dem an der Zylinderanschlagfläche anliegenden ersten Einzelkolben zur Anlage kommt. Hierdurch wird die definierte Neutralstellung der hydraulischen Stelleinrichtung nach der Erfindung herbeigeführt. In dieser liegt der erste Einzelkolben an der Zylinderanschlagfläche über ein Druckmittel beaufschlagt an und der zweite Einzelkolben liegt über ein Druckmittel beaufschlagt an dem ersten Einzelkolben an. Aufgrund des vorstehend beschriebenen Ungleichgewichtes der Kräfte ist der zweite Einzelkolben aber nicht dazu in der Lage, den ersten Einzelkolben zu bewegen, so daß sich das Stellelement am zweiten Einzelkolben in einer definierten Neutralstellung befindet, die durch nur eine Zylinderanschlagfläche bestimmt wird.

In Fortbildung der Erfindung ist dabei vorgesehen, daß beiden Einzelkolben an ihren jeweils größeren Wirkflächen ein Druckraum im Zylinder mit einem Druckmittelanschluß zugeordnet ist und an mindestens einem der Einzelkolben eine Wegerfassungseinrichtung vorgesehen ist. Über die Wegerfassungseinrichtung in der Form von beispielsweise einem magnetoelektrischen Wegsensor kann die Bewegung des beispielsweise zweiten Einzelkolbens und damit des an diesem angeordneten Stellelementes erfaßt und überwacht werden, so daß beispielsweise auf der Basis der Auswertung dieses Überwachungssignales ein Aktuator für eine Kupplung betätigt werden kann.

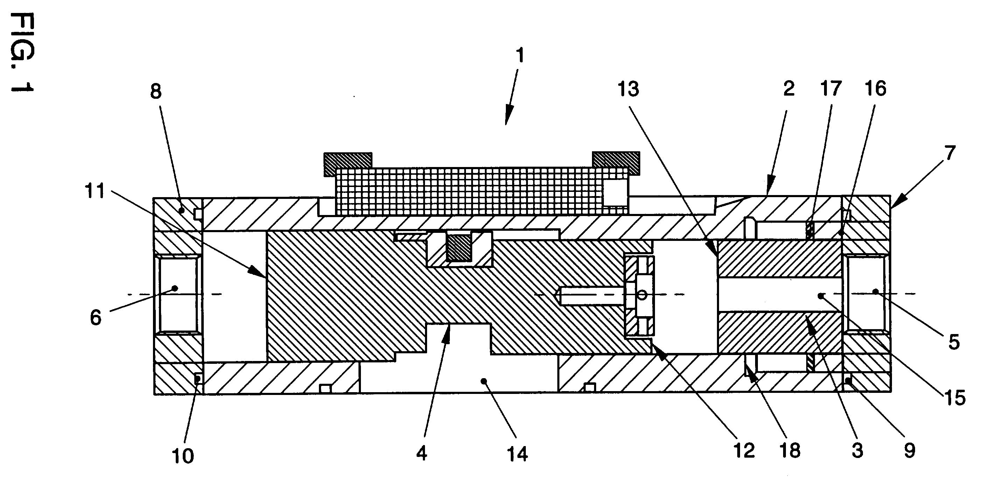

Die Erfindung wird im folgenden anhand der Zeichnung näher erläutert. Diese zeigt in der einzigen Figur eine Schnittansicht einer hydraulischen Stelleinrichtung nach der Erfindung.

Die hydraulische Stelleinrichtung 1 besitzt in der dargestellten Ausführungsform ein Gehäuse 2, welches gleichzeitig den Zylinder der hydraulischen Stelleinrichtung 1 bildet.

Im Zylinder 2 befinden sich ein erster als Stufenkolben ausgebildeter Einzelkolben 3 und ein zweiter als Stufenkolben ausgebildeter Einzelkolben 4 angeordnet und zwar so, daß die beiden Stufenkolben 3, 4 über eine Beaufschlagung mit Druckmittel durch zwei Durchtrittsbohrungen 5, 6 hindurch im Zylinder 2 verschoben werden können.

Die Durchtrittsbohrungen 5, 6 erstrecken sich dabei durch beidseitig des Zylinders 2 angeordnete Deckel 7, 8 hindurch, wobei die Deckel 7, 8 den Zylinder 2 über Ringdichtungen 9, 10 verschließen. Der erste Einzelkolben 3 ist in der Zeichnung in einer Stellung angeordnet dargestellt, in der er am Deckel 7 anliegt. Diese Stellung wird dadurch erreicht, daß die Durchtrittsöffnung 5 drucklos geschaltet wird und die Durchtrittsöffnung 6 beaufschlagt wird, so daß der zweite Einzelkolben 4 über seine Wirkfläche 11 mit Druck beaufschlagt nach rechts verschoben wird. Es ist dabei zu beachten, daß in der Zeichnung eine Darstellung gewählt worden ist, bei der der zweite Kolben 4 noch nicht vollständig nach rechts verschoben worden ist, in der er mit seiner kleineren Wirkfläche 12 an der kleineren Wirkfläche 13 des ersten Stufenkolbens 3 anliegt. Diese rechte Endstellung entspricht einer ersten geschalteten Stellung eines nicht dargestellten Getriebes, wobei diese dadurch zustande kommt, daß über die Bewegung des zweiten Stufenkolbens 4 eine an einer Ausnehmung 14 angeordnete und nicht näher dargestellte Schaltgabel vom zweiten Stufenkolben 4 mitgenommen wird und die Schaltgabel damit ein Zahnradpaar des Getriebes in Eingriff bringt.

In entsprechender Weise kann über eine Bewegung des zweiten Stufenkolbens 4 in die linksseitige Endstellung durch eine Druckmittelbeaufschlagung über die Durchtrittsbohrung 5 die Schaltgabel nach links verschoben werden, um ein anderes Zahnradpaar des Getriebes in Eingriff zu bringen. Das durch die Durchtrittsöffnung 5 zugeführte Druckmittel tritt dabei durch eine Durchtrittsöffnung 15 des ersten Stufenkolbens 3 hindurch und beaufschlagt die kleinere Wirkfläche 12 des zweiten Stufenkolbens 4, dessen Durchtrittsöffnung 6 drucklos geschaltet ist. Gleichzeitig beaufschlagt das Druckmittel auch die Wirkfläche 16 des ersten Stufenkolbens 3, die die größte Wirkfläche der beiden Einzelkolben 3, 4 ist. Hierdurch wird der erste Stufenkolben 3 in der Zeichnungsebene in Richtung nach links verschoben, bis er über eine zwischen gelegte Anschlagscheibe 17 an einer Zylinderanschlagfläche 18 zur Anlage kommt und sich daher auch einer weiteren Beaufschlagung der Wirkfläche 16 nicht mehr weiter nach links bewegen kann.

Wenn die hydraulische Stelleinrichtung 1 in die Neutralstellung gebracht werden soll, dann werden beide Durchtrittsöffnungen 5, 6 mit Druckmittel beaufschlagt, so daß der erste Stufenkolben 3 seine an der Zylinderanschlagfläche 18 anliegende Endstellung einnimmt und der zweite Stufenkolben 4 über seine kleinere Wirkfläche 12 an der kleineren Wirkfläche 13 des ersten Stufenkolbens 3 zur Anlage kommt. Diese definierte Neutralstellung wird also über nur eine Anschlagfläche zwischen dem Einzelkolben 3 und dem Zylinder 1 bestimmt und dadurch, daß der Einzelkolben 3 eine in der Neutralstellung größere beaufschlagte Wirkfläche 16 besitzt als der zweite Stufenkolben 4 mit seiner beaufschlagten Wirkfläche 11. Hierdurch wird der erste Stufenkolben 3 an der Zylinderanschlagfläche 18 anliegend gehalten, während der zweite Stufenkolben 4 mit seiner Wirkfläche 12 an der Wirkfläche 13 des ersten Stufenkolbens anliegend gehalten wird, so daß zum Erreichen der beiden Schaltstellungen und einer definierten Neutralstellung der hydraulischen Stelleinrichtung nur zwei in nur einem Zylinder angeordnete Einzelkolben erforderlich sind.

Über eine Wegerfassungseinrichtung in der Form eines Wegsensors 19 und eines Magneten 20 kann von einer nicht dargestellten Steuereinrichtung die Bewegung des Einzelkolbens 4 und damit des Stellelementes überwacht werden.

Hinsichtlich vorstehend im einzelnen nicht näher erläuterter Merkmale der Erfindung wird im übrigen ausdrücklich auf die Ansprüche und die Zeichnung verwiesen. Der Schutzumfang der vorliegenden Erfindung wird ausschließlich durch die zugehörigen Patentansprüche bestimmt und die obige Beschreibung dient lediglich der Erläuterung.

### BEZUGSZEICHENLISTE

- 1: hydraulische Stelleinrichtung
- 2: Gehäuse, Zylinder
- 3: erster Einzelkolben, Stufenkolben
- 4: zweiter Einzelkolben, Stufenkolben
- 5: Durchtrittsbohrung
- 6: Durchtrittsbohrung
- 7: Deckel
- 8: Deckel
- 9: Dichtung
- 10: Dichtung
- 11: Wirkfläche
- 12: Wirkfläche
- 13: Wirkfläche
- 14: Ausnehmung
- 15: Durchtrittsöffnung
- 16: Wirkfläche
- 17: Anschlagscheibe
- 18: Zylinderanschlagfläche
- 19: Wegsensor
- 20: Magnet

## Patentansprüche

1. Hydraulische Stelleinrichtung mit einem Zylinder (1) und einem durch ein Druckmittel doppelseitig beaufschlagbaren Kolben, an den ein Stellelement gekoppelt ist, dadurch gekennzeichnet, daß der Kolben aus zwei gegeneinander im Zylinder verschiebbaren ersten und zweiten Einzelkolben (3, 4) gebildet ist.

2. Hydraulische Stelleinrichtung nach Anspruch 1, dadurch gekennzeichnet, daß die Einzelkolben (3, 4) zwischen Endstellungen und einer Neutralstellung im Zylinder (1) bewegbar sind, die durch Anschlagstellungen der Einzelkolben (3, 4) definiert sind.

3. Hydraulische Stelleinrichtung nach Anspruch 2, dadurch gekennzeichnet, daß die Neutralstellung dadurch gebildet ist, daß ein Einzelkolben (3) an einer Anschlagfläche (18) des Zylinders (1) anliegt und die beiden Einzelkolben (3, 4) aneinander anliegen.

4. Hydraulische Stelleinrichtung nach einem der Ansprüche 1 bis 3, dadurch gekennzeichnet, daß die Einzelkolben (3, 4) jeweils zwei unterschiedlich große vom Druckmittel beaufschlagbare Wirkflächen (11, 12; 13, 16) aufweisen.

5. Hydraulische Stelleinrichtung nach einem der Ansprüche 1 bis 4, dadurch gekennzeichnet, daß der in der Neutralstellung an der Zylinderanschlagfläche (18) anliegende erste Einzelkolben (3) ein Stufenkolben mit einer Durchtrittsöffnung (15) für das Druckmittel ist und die größte Wirkfläche (16) der Einzelkolben (3, 4) aufweist.

6. Hydraulische Stelleinrichtung nach einem der Ansprüche 1 bis 5, dadurch gekennzeichnet, daß der zweite Einzelkolben (4) ein Stufenkolben ist, an den das Stellelement gekoppelt ist.

7. Hydraulische Stelleinrichtung nach einem der Ansprüche 1 bis 6, dadurch gekennzeichnet, daß beiden Einzelkolben (3, 4) an ihren jeweils größeren Wirkflächen (11; 16) ein Druckraum im Zylinder (1) mit einem Druckmittelanschluß (5, 6) zugeordnet ist und an mindestens einem der Einzelkolben (3, 4) eine Wegerfassungseinrichtung (19, 20) vorgesehen ist.

8. Hydraulische Stelleinrichtung nach einem der Ansprüche 1 bis 7, dadurch gekennzeichnet, daß der erste Einzelkolben (3) an seiner der Zylinderanschlagfläche (18) zugeordneten Seite mit einer Anschlagscheibe (17) versehen ist.
